# DEMANDE DE BREVET EUROPEEN

(11) **EP 4 635 281 A1**
(43) Date de publication de la demande: **22.10.2025**
(21) Numéro de dépôt: 25161651.2
(22) Date de dépôt: 04.03.2025
(51) Int. Cl.: A01B 73/00, A01D 78/10, A01D 75/30, A01D 78/14

(54) **MACHINE DE RÉCOLTE À PLUSIEURS UNITÉS PERMETTANT D EXÉCUTER DES SÉQUENCES**

(30) Priorité: 14.03.2024 FR 2402565
(71) Demandeur: Kuhn SAS, 67700 Saverne (FR)
(72) Inventeur: ROTH, Elodie, 67500 HAGUENAU (FR); ORIEDE, Fabien, 67310 COSSWILLER (FR)

(57) **Abrégé**

La présente invention est relié à une machine (1) comportant une unité droite (30) et une unité gauche (40), une unité centrale (50) s'étendant entre l'unité gauche et l'unité droite vu suivant un sens de travail (S), chaque unité pouvant occuper une configuration de travail et une configuration de man?uvre, une interface (8) permettant la saisie de commandes étant associée à la machine et reliée à un contrôleur (7) permettant de transposer en abaissement chaque unité, c'est-à-dire la transposer de sa configuration de man?uvre en configuration de travail, et de la transposer en soulèvement, c'est-à-dire la transposer de sa configuration de travail en configuration de man?uvre, le contrôleur étant configuré pour permettre d'exécuter une séquence en abaissement et une séquence en soulèvement au cours desquelles chaque saisie d'une même commande permet de transposer en abaissement ou soulèvement au moins une des unités.

## Description

L'invention concerne le domaine du machinisme agricole, et particulièrement une machine de récolte à plusieurs unités permettant d'exécuter des séquences.

L'invention concerne plus particulièrement une machine de récolte se déplaçant dans un sens de travail et comportant une unité droite, une unité gauche et une unité centrale s'étendant au moins majoritairement entre l'unité gauche et l'unité droite vu suivant le sens de travail, chaque unité pouvant occuper une configuration de travail et une configuration de manœuvre, une interface permettant la saisie de commandes étant associée à la machine et reliée à un contrôleur permettant de transposer en abaissement chaque unité, c'est-à-dire la transposer de sa configuration de manœuvre en configuration de travail, et de transposer en soulèvement chaque unité, c'est-à-dire la transposer de sa configuration de travail en configuration de manœuvre.

Le document EP3892084A1 divulgue une machine de récolte à plusieurs unités, la machine comportant deux unités gauches et deux unités droites et permettant, à la suite de la saisie d'une commande via l'interface, de transposer en abaissement ou soulèvement l'unité avant droite et, après une temporisation, de transposer automatiquement en abaissement ou soulèvement l'unité arrière droite. De plus, à la suite de la saisie d'une autre commande via l'interface, la machine permet de transposer en abaissement ou soulèvement l'unité avant gauche et, après une temporisation, de transposer automatiquement en abaissement ou soulèvement l'unité arrière gauche. Une telle machine permet de réduire le nombre de commandes à saisir par l'opérateur lors du franchissement d'une délimitation entre une zone à travailler et une zone à exclure.

Un inconvénient de cette machine est toutefois que l'utilisateur doit, lorsque la machine franchit une délimitation entre une zone à travailler et une zone à exclure, se concentrer sur le choix de la commande à saisir sur l'interface et en même temps sur le moment opportun pour transposer en abaissement ou soulèvement chacune des unités avant, nécessitant une dextérité et une concentration importantes, de sorte que l'opérateur risque facilement de se tromper de commande et/ou de rater le moment opportun pour transposer en abaissement ou soulèvement au moins une de ces unités. De plus, la temporisation entre les deux unités d'un même côté permet une transposition en abaissement ou soulèvement des unités arrière à des moments opportuns uniquement pour un type précis de délimitation. Lorsque cette délimitation varie, il est nécessaire de modifier la temporisation pour rester précis dans les moments de transposer en abaissement ou soulèvement les unités arrière et pour permettre une bonne qualité de travail. En effet, une temporisation mal réglée induit un risque de travailler une zone à exclure, dans le cas d'une transposition en soulèvement d'unité trop tardif et/ou d'une transposition en abaissement d'unité trop hâtif, et/ou de laisser une zone à travailler non travaillée, dans le cas d'une transposition en soulèvement d'unité trop hâtif et/ou d'une transposition en abaissement d'unité trop tardif. Enfin, si le plan médian de la machine n'est pas aligné avec le plan médian du tracteur, lors de virages notamment, la temporisation risque d'autant plus d'être imprécise.

Le but de la présente invention est de pallier au moins certains des problèmes précités et notamment de soulager l'opérateur lors du franchissement d'une délimitation entre zone à travailler et zone à exclure, tout en permettant une meilleure qualité de travail grâce à une meilleure maniabilité de la machine, respectivement grâce à une facilitation des transpositions en abaissement et soulèvement des unités.

A cet effet, l'invention propose que le contrôleur soit configuré pour permettre d'exécuter une séquence en abaissement au cours de laquelle chaque saisie d'une même commande d'abaissement permet de transposer en abaissement au moins une des unités, et une séquence en soulèvement au cours de laquelle chaque saisie d'une même commande de soulèvement permet de transposer en soulèvement au moins une des unités.

L'invention sera plus claire à la suite de la lecture de la description ci-après se rapportant à une variante préférée donnée à titre d'exemple. La description fait référence aux dessins schématisés annexés, dans lesquels :
[Fig. 1] est une vue de dessus d'une machine de récolte selon l'invention ;
[Fig. 2] est une vue d'une réalisation possible d'une interface de la machine selon l'invention ;
[Fig. 3A], [Fig. 3B] et [Fig. 3C] sont d'autres vues de réalisations possibles de l'interface de la machine selon l'invention ;
[Fig. 4] est une vue de dessus simplifiée d'une machine de récolte s'apprêtant à franchir une délimitation entre zone travaillée et zone à exclure ;
[Fig. 5] est une vue latérale simplifiée de la machine de la figure 1 au cours de laquelle les unités droite, gauche et centrale sont en configuration de manœuvre ;
[Fig. 6] est une vue de dessus simplifiée d'une machine de récolte, dont l'agencement des unités est tel que les unités droite, gauche et centrale sont alignées orthogonalement au sens de travail.

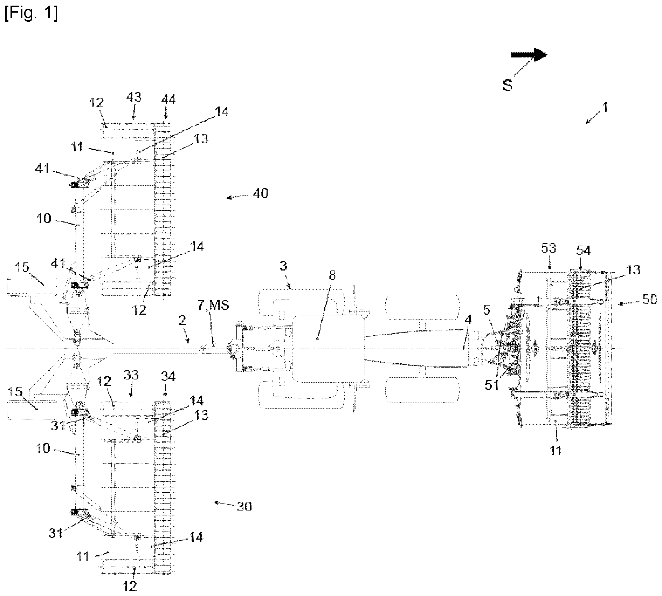

La figure 1 illustre une machine (1) de récolte se déplaçant dans un sens de travail (S). Sur cette figure, la machine (1) comporte une unité droite (30), une unité gauche (40) et une unité centrale (50). L'unité centrale (50) s'étend au moins majoritairement entre l'unité gauche (40) et l'unité droite (30) vu suivant le sens de travail (S), permettant de récolter sur une largeur importante avec un minimum de chevauchement entre l'unité centrale (50) et chacune des unités gauche (40) et droite (30) vu suivant le sens de travail (S). Chaque unité (30,40,50) peut occuper une configuration de travail et une configuration de manœuvre. L'unité droite (30) peut être déplacée entre sa configuration de travail et sa configuration de manœuvre par un actionneur droit (31). L'unité gauche (40) peut être déplacée entre sa configuration de travail et sa configuration de manœuvre par un actionneur gauche (41). Enfin, l'unité centrale (50) peut être déplacée entre sa configuration de travail et sa configuration de manœuvre par un actionneur central (51).

Dans la variante préférée, à chaque unité (30,40,50) est associé un unique actionneur (31,41,51) permettant de transposer l'unité (30,40,50) entre configuration de travail et configuration de manœuvre. Alternativement, plusieurs actionneurs peuvent être nécessaires afin de transposer une unité (30,40,50) entre configuration de travail et configuration de manœuvre. Chaque actionneur (31,41,51) peut être réalisé par au moins un vérin hydraulique. Alternativement, les actionneurs (31,41,51) pourraient être électriques et/ou pneumatiques.

Une interface (8) permettant la saisie de commandes est associée à la machine (1). L'interface (8) est reliée à un contrôleur (7). Le contrôleur (7) peut envoyer des signaux à l'interface (8) et en recevoir de sa part. L'interface (8) peut notamment envoyer des signaux au contrôleur (7) afin qu'il transpose en abaissement ou soulèvement au moins une unité (30,40,50). De plus, le contrôleur (7) peut envoyer des signaux aux actionneurs (31,41,51) afin de transposer en abaissement ou soulèvement les unités (30,40,50) associées et/ou à des valves permettant d'actionner ces actionneurs (31,41,51). Actionner un ou des actionneur(s) (31,41,51) revient à transposer en abaissement ou soulèvement la ou les unité(s) (30,40,50) associée(s).

Le contrôleur (7) permet ainsi à chaque actionneur (31,41,51) de transposer en abaissement l'unité (30,40,50) respective. Transposer en abaissement une unité (30,40,50) revient à la transposer de sa configuration de manœuvre en configuration de travail. Le contrôleur (7) permet aussi de transposer en soulèvement chaque unité (30,40,50). Respectivement, le contrôleur (7) permet à chaque actionneur (31,41,51) de transposer en soulèvement l'unité (30,40,50) respective. Transposer en soulèvement une unité (30,40,50) revient à la transposer de sa configuration de travail en configuration de manœuvre.

L'unité droite (30) est située sur la droite de la machine (1) vu dans le sens de travail (S) et l'unité gauche (40) sur la gauche de la machine (1). Tel que représentée sur les figures 1, 4, 5 et 6, la machine (1) comporte aussi un châssis (2) reliant au moins les unités droite (30) et gauche (40) à un tracteur (3). De préférence, chacune des unités gauche (30) et droite (40) est reliée au châssis (2) par une potence (10) respective. Tel que représenté sur la figure 1, le châssis (2) est relié au tracteur (3) par les deux bras inférieurs de l'attelage trois points arrière du tracteur (3). Tel qu'illustré sur les figures 1, 4 et 5, l'unité centrale (50) est reliée au tracteur (3) par le biais d'un châssis avant (5) et de l'attelage trois points avant dudit tracteur (3). Alternativement, l'actionneur central (51) fait partie du tracteur (3) et peut être actionné par le contrôleur (7) de la machine (1).

Le tracteur (3) permet de déplacer la machine (1) dans le sens de travail (S) et préférentiellement aussi de l'animer. La machine (1) pourrait également être automotrice, le tracteur (3) faisant alors partie intégrante de la machine (1). La machine (1) présente un plan médian (4) vertical. Lorsque la machine (1) se déplace en ligne droite, le plan médian (4) est parallèle au sens de travail (S). Le plan médian (4) passe en outre par le centre de la machine (1) et/ou du châssis (2). La machine (1) est sensiblement symétrique suivant le plan médian (4). Le tracteur (3) présente aussi un plan de symétrie confondu avec le plan médian (4) en ligne droite. Un opérateur conduit le tracteur (3) et/ou la machine (1).

Dans ce document, les concepts « gauche », « droite », « avant », « arrière », « latéral », « devant » et « derrière » sont définis en regardant dans le sens de travail (S). Les concepts « intérieur » et « extérieur » sont définis par rapport au plan médian (4). Un composant extérieur est plus éloigné du plan médian (4) qu'un composant intérieur.

En configuration de travail, chaque unité (30,40,50) prend appui sur le sol d'un champ, permettant de soulager le châssis (2) et/ou le châssis avant (5), le cas échéant. Afin de récolter un produit, chaque unité (30,40,50) comporte un transporteur (34,44,54) respectif. Chaque unité (30,40,50) comporte aussi un groupeur (33,43,53) respectif. Chaque groupeur (33,43,53) est destiné à déplacer le produit dans une direction de groupage (C), préférentiellement dans les deux sens. De préférence, en configuration de travail, chaque groupeur (33,43,53) s'étend suivant la direction de groupage (C). Chaque groupeur (33,43,53) peut notamment comporter une vis sans fin, partiellement contenue dans une coque guidant le produit. La vis sans fin est préférentiellement entrainée autour d'un axe horizontal et transversal au sens de travail (S). Alternativement ou additionnellement, chaque groupeur (33,43,53) comporte une bande sans fin tendue entre au moins deux cylindres (12). Chaque bande sans fin est préférentiellement entrainée par au moins un des cylindres (12). Les au moins deux cylindres (12) sont guidés en rotation autour d'axes sensiblement parallèles au sens de travail (S). Le produit est notamment végétal, tel que de l'herbe ou de la paille. Préférentiellement, la ou chaque direction de groupage (C) est orthogonale au sens de travail (S).

En configuration de travail, chaque transporteur (34,44,54) est situé devant le groupeur (33,43,53) de la même unité (30,40,50). Chaque transporteur (34,44,54) est destiné à transférer du produit au groupeur (33,43,53) respectif dans un sens parallèle au sens de travail (S). Préférentiellement, chaque transporteur (34,44,54) présente sensiblement la même longueur que le groupeur (33,43,53) respectif suivant la direction de groupage (C).

Chaque transporteur (34,44,54) peut notamment comporter au moins une barre de fauche et/ou au moins un rouleau de ramassage. Lorsque le transporteur (34,44,54) comprend une barre de fauche, il permet de faucher des végétaux sur pied. Lorsque le transporteur (34,44,54) est réalisé uniquement par un rouleau de ramassage, il peut ramasser du produit, tel que des végétaux fauchés, gisant au sol. Chaque transporteur (34,44,54) peut comporter un rouleau de ramassage entrainé en rotation autour d'un axe de rouleau (13) respectif. Préférentiellement, chaque axe de rouleau (13) est perpendiculaire au sens de travail (S). Chaque rouleau de ramassage comporte des doigts répartis sur sa périphérie destinés à ramasser du produit au sol et à le transférer au groupeur (33,43,53) respectif en le projetant vers l'arrière. Chaque rouleau de ramassage est préférentiellement entrainé par un moteur d'entrainement respectif, électrique ou préférentiellement hydraulique. Chaque rouleau de ramassage pourrait également être entrainé via la prise de force du tracteur (3), comme le groupeur (33,43,53) respectif.

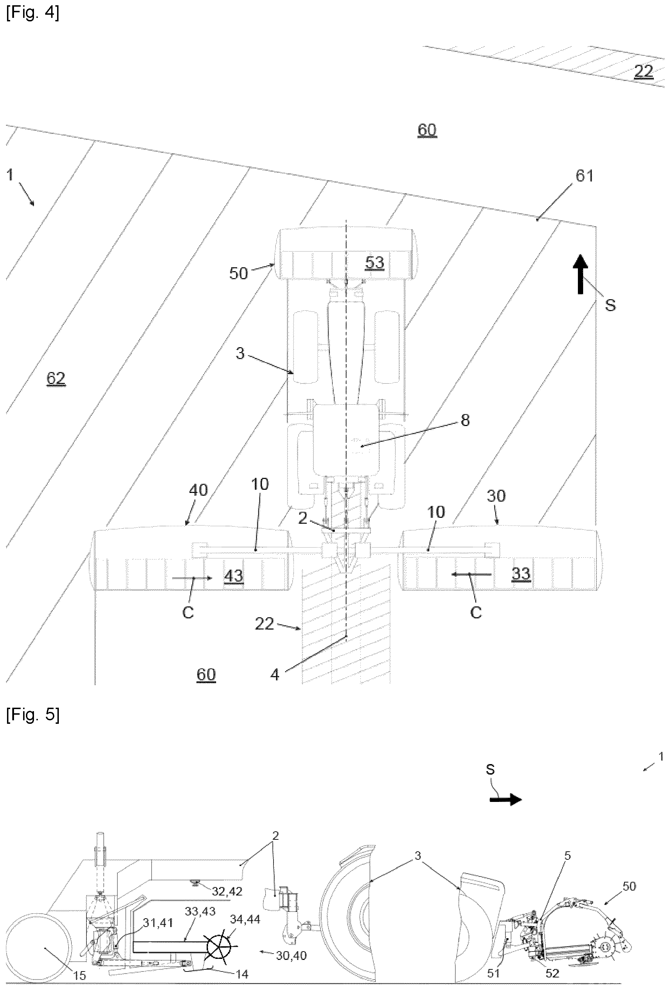

Avant le passage d'une unité (30,40,50) en configuration de travail, la surface du champ constitue une zone à travailler (62). Dans le cas où un chemin traverse le champ par exemple, ce chemin est préférentiellement considéré comme une zone à exclure (60). Tel qu'illustré sur la figure 5, en configuration de manœuvre, chaque unité (30,40,50) est éloignée du sol. La configuration de manœuvre permet aux unités (30,40,50) de ne pas travailler une zone, notamment une zone à exclure (60). Aussi, une zone déjà travaillée par une unité (30,40,50) est une zone à exclure (60). Ainsi qu'il ressort de la figure 4, le champ peut comporter au moins une zone à travailler (62) et au moins une zone à exclure (60). Une délimitation (61) est la ligne entre une zone à travailler (62) et une zone à exclure (60).

Afin de soulager l'opérateur lorsque la machine (1) doit franchir une délimitation (61), le contrôleur (7) est configuré pour permettre d'exécuter une séquence en abaissement au cours de laquelle chaque saisie d'une même commande d'abaissement permet de transposer en abaissement au moins une des unités (30,40,50). Afin de soulager l'opérateur lorsque la machine (1) doit franchir une délimitation (61) dans le sens opposé, le contrôleur (7) est configuré pour permettre d'exécuter une séquence en soulèvement au cours de laquelle chaque saisie d'une même commande de soulèvement permet de transposer en soulèvement au moins une des unités (30,40,50).

Grâce à ces dispositions, lorsque la machine (1) doit franchir une délimitation (61), l'opérateur répète avantageusement la même commande pour chacune des unités (30,40,50), risquant ainsi moins de se tromper de commande. L'opérateur ainsi soulagé peut se concentrer davantage sur le moment opportun pour transposer en abaissement ou soulèvement chacune des unités (30,40,50) par rapport à la délimitation (61), améliorant ainsi la précision de ces actionnements, notamment lorsque la machine (1) et/ou le tracteur (3) ne permet(tent) pas de les automatiser, et évitant ainsi de travailler deux fois le même endroit, ainsi que de laisser des endroits non travaillés, améliorant la qualité de travail.

Dans la variante préférée, le contrôleur (7) est configuré pour permettre d'exécuter une séquence en soulèvement droite. Au cours d'une séquence en soulèvement droite, la première saisie de la commande de soulèvement permet de transposer en soulèvement l'unité centrale (50), la deuxième saisie de la commande de soulèvement permet de transposer en soulèvement l'unité droite (30), et la troisième saisie de la commande de soulèvement permet de transposer en soulèvement l'unité gauche (40). La séquence en soulèvement droite peut notamment être employée dans le cas d'une délimitation (61) et d'une machine (1) avec agencement d'unités (30,40,50) telles que représentées sur la figure 4.

Dans la variante préférée, afin de franchir la délimitation (61) représentée sur la figure 4 dans le sens opposé et avec une machine (1) telle que représentée sur la figure 4, le contrôleur (7) est configuré pour permettre d'exécuter une séquence en abaissement droite. Au cours d'une séquence en abaissement droite, la première saisie de la commande d'abaissement permet de transposer en abaissement l'unité centrale (50), la deuxième saisie de la commande d'abaissement permet de transposer en abaissement l'unité droite (30), et la troisième saisie de la commande d'abaissement permet de transposer en abaissement l'unité gauche (40). Dans une variante alternative, seules les deux séquences droites (en soulèvement et en abaissement) peuvent être exécutées, réduisant les capacités informatiques nécessaires dans un cas de figure particulièrement fréquent. Par souci de simplification de la rédaction, les termes « séquences droites » englobent les séquences en soulèvement droite et en abaissement droite.

Afin de permettre de soulager l'opérateur pour différents types de délimitations (61), dans la variante préférée, le contrôleur (7) est aussi configuré pour permettre d'exécuter des séquences (de soulèvement et d'abaissement) gauches. Le contrôleur (7) est ainsi préférentiellement configuré pour permettre d'exécuter une séquence en soulèvement gauche. Au cours d'une séquence en soulèvement gauche, la première saisie de la commande de soulèvement permet de transposer en soulèvement l'unité centrale (50), la deuxième saisie de la commande de soulèvement permet de transposer en soulèvement l'unité gauche (40), et la troisième saisie de la commande de soulèvement permet de transposer en soulèvement l'unité droite (30). Réciproquement, le contrôleur (7) est préférentiellement configuré pour permettre d'exécuter une séquence en abaissement gauche. Au cours d'une séquence en abaissement gauche, la première saisie de la commande d'abaissement permet de transposer en abaissement l'unité centrale (50), la deuxième saisie de la commande d'abaissement permet de transposer en abaissement l'unité gauche (40), et la troisième saisie de la commande d'abaissement permet de transposer en abaissement l'unité droite (30). Par souci de simplification, les termes « séquences gauches » englobent les séquences en soulèvement gauche et en abaissement gauche.

Dans ce document, dès qu'une séquence a démarré, la séquence est dite en cours. De manière simple et rapide, dans la variante préférée, le contrôleur (7) est configuré pour que, lorsqu'aucune séquence n'est en cours, la première saisie de la commande d'abaissement ou de soulèvement permette de démarrer une séquence.

Dans la variante préférée, le contrôleur (7) est aussi configuré pour permettre d'exécuter une séquence en abaissement symétrique. Au cours d'une séquence en abaissement symétrique, la première saisie de la commande d'abaissement permet de transposer en abaissement l'unité centrale (50), et la deuxième saisie de la commande d'abaissement permet de transposer en abaissement simultanément l'unité gauche (40) et l'unité droite (30). Enfin, dans la variante préférée, le contrôleur (7) est aussi configuré pour permettre d'exécuter une séquence en soulèvement symétrique. Au cours d'une séquence en soulèvement symétrique, la première saisie de la commande de soulèvement permet de transposer en soulèvement l'unité centrale (50), et la deuxième saisie de la commande de soulèvement permet de transposer en soulèvement simultanément l'unité gauche (40) et l'unité droite (30). Par souci de simplification, les termes « séquences symétriques » englobent les séquences en soulèvement symétrique et en abaissement symétrique.

Dans une variante alternative, une commande spécifique doit être saisie pour mettre fin à une séquence, même après que toutes les commandes de ladite séquence aient été saisies. Une telle variante nécessite ainsi une saisie de commande supplémentaire à chaque séquence, faisant perdre du temps à l'opérateur et pouvant induire un oubli qui affecterait négativement la qualité de travail. Dans la variante préférée, chaque séquence est enregistrée avec un nombre déterminé de commandes. Autrement dit, un nombre déterminé de commandes est associé à chaque séquence. Notamment, chacune des séquences gauches et droites présente trois commandes. De plus, chacune des séquences symétriques présente deux commandes. Ainsi, chaque séquence présente au moins deux commandes. De manière simple et rapide, le contrôleur (7) est configuré pour que chaque séquence prenne fin une fois que toutes les commandes de cette séquence sont saisies. Autrement dit, toutes les commandes d'une séquence doivent avoir été saisies afin de pouvoir démarrer une autre séquence. Il est également stipulé qu'au cours d'une séquence, chaque unité (30,40,50) n'est transposée en abaissement ou en soulèvement qu'une fois.

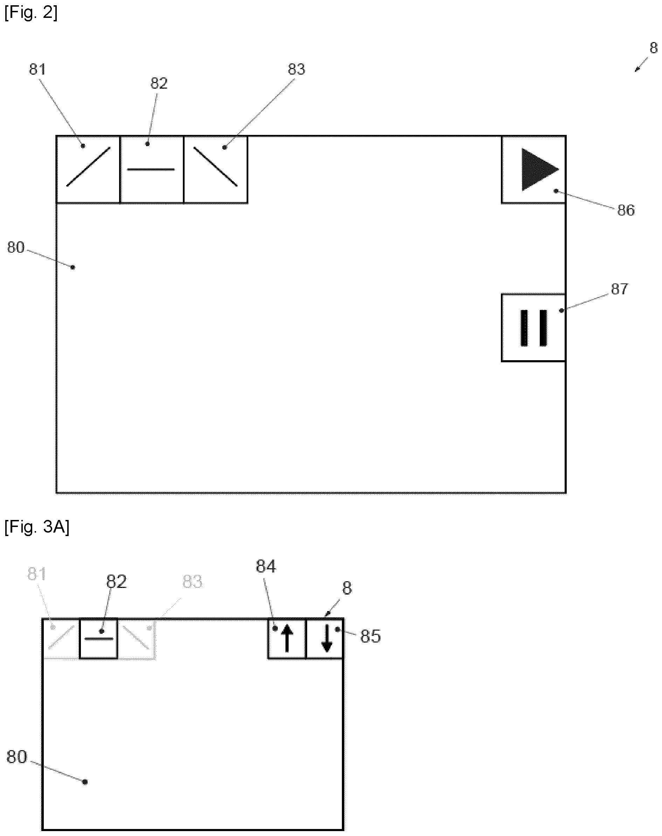

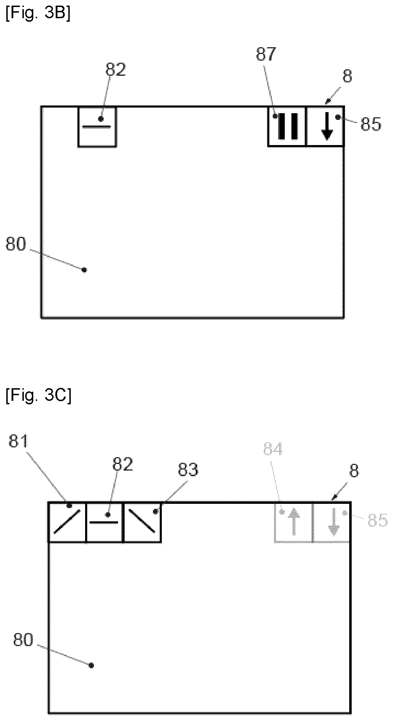

Ainsi qu'il ressort des figures 2 et 3, afin de saisir une commande sur l'interface (8), l'interface (8) est dotée d'une pluralité de touches (81,82,83,84,85,86,87). Les touches (81-87) permettent la saisie de commandes. Préférentiellement, les touches (81-87) sont actionnées par l'opérateur. Les commandes sont donc préférentiellement saisies par l'opérateur. La saisie d'une commande peut correspondre à l'actionnement d'une ou de plusieurs touche(s) (81-87), respectivement à l'actionnement consécutif et/ou simultané d'une ou de plusieurs touche(s) (81-87).

De préférence, l'interface (8) est dotée d'un écran (80) permettant d'afficher des renseignements sur la machine (1), comme son état et/ou ses réglages. L'écran (80) peut être tactile et comporter des touches (81-87) programmables. Alternativement ou additionnellement, l'interface (8) peut comporter un joystick et/ou un boîtier à touches (81-87) ne comportant pas d'écran (80). L'interface (8) peut ainsi comporter des touches (81-87) mécaniques, sur un joystick par exemple, et/ou des touches (81-87) programmables sur un écran (80), toutes permettant la saisie de commandes. Ainsi que représenté sur la figure 2, afin de repérer plus facilement une touche (81-87), un pictogramme, une image et/ou du texte est préférentiellement associé à chaque touche (81-87) programmable.

Avec un écran (80), au moins une touche (81-87) programmable peut occuper différents emplacements sur l'écran (80). Afin d'éviter des erreurs de manipulation, chaque touche (81-87) occupe préférentiellement toujours le même emplacement sur l'écran (80), au moins au cours d'une même séquence.

Afin d'éviter un actionnement non désiré, au moins une touche (81-87) de l'interface (8) peut être désactivée. Lorsqu'une touche (81-87) est désactivée, son actionnement ne produit aucun effet. Par ailleurs, notamment dans le cas d'une interface (8) avec écran (80), au moins une touche (81-87) de l'interface (8) peut être affichée différemment que les autres. Aussi, lorsqu'une touche (81-87) programmable est désactivée, elle est préférentiellement affichée différemment, renseignant avantageusement l'opérateur sur les touches (81-87) actives, respectivement sur les touches (81-87) désactivées, à un instant précis. Dans la variante préférée, chaque touche (81-87) peut ainsi présenter une première apparence et une deuxième apparence. Préférentiellement, une touche (81-87) présentant la première apparence est une touche (81-87) active. Une touche (81-87) active est une touche (81-87) qui n'est pas désactivée. Ainsi que représentée sur la figure 2, une touche (81-87) présentant la première apparence peut notamment présenter des traits pleins, un contraste fort et ou une première couleur. Préférentiellement, une touche (81-87) présentant la deuxième apparence est une touche (81-87) désactivée. Une touche (81-87) présentant la deuxième apparence peut présenter une deuxième couleur ou être dissimulée. Ainsi que représentée sur la figure 3B, les touches de sélection gauche (81) et droite (83) sont dissimulées car elles sont désactivées. De telles dispositions permettent avantageusement de réduire le risque de se tromper de touche (81-87). Aussi, chaque touche (81-87) peut aussi présenter une troisième apparence, préférentiellement lorsqu'elle est active mais dont la commande (ou fonction) n'est pas en cours, permettant de renseigner davantage encore l'opérateur sur l'état de la machine (1). Une touche (81-87) présentant la troisième apparence peut notamment présenter des traits en pointillés, grisés et/ou une troisième couleur. Sur l'exemple de la figure 3A, les touches de sélection gauche (81) et droite (83) présentent la troisième apparence car elles sont actives et que la commande en cours est le mode symétrique associé à la touche de sélection symétrique (82).

Dans une première variante de réalisation non illustrée sur les figures, afin de transposer en soulèvement les unités (30,40,50) au cours d'une séquence en soulèvement droite, chaque saisie de la commande de soulèvement correspond à l'actionnement d'une touche en soulèvement droite. De la même manière, dans cette première variante, afin de transposer en abaissement les unités (30,40,50) au cours d'une séquence en abaissement droite, chaque saisie de la commande d'abaissement correspond à l'actionnement d'une touche en abaissement droite.

Dans la première variante, afin de transposer en soulèvement les unités (30,40,50) au cours d'une séquence en soulèvement gauche, chaque saisie de la commande de soulèvement correspond à l'actionnement d'une touche en soulèvement gauche. Dans la première variante, afin de transposer en abaissement les unités (30,40,50) au cours d'une séquence en abaissement gauche, chaque saisie de la commande d'abaissement correspond à l'actionnement d'une touche en abaissement gauche.

Toujours dans la première variante, afin de transposer en soulèvement les unités (30,40,50) au cours d'une séquence en soulèvement symétrique, chaque saisie de la commande de soulèvement correspond à l'actionnement d'une touche en soulèvement symétrique. Dans la première variante, afin de transposer en abaissement les unités (30,40,50) au cours d'une séquence en abaissement symétrique, chaque saisie de la commande d'abaissement correspond à l'actionnement d'une touche en abaissement symétrique.

Ainsi, dans la première variante, l'interface (8) doit présenter au moins six touches (81-87) destinées à la transposition en abaissement et soulèvement des unités (30,40,50) dans le cas où six séquences sont enregistrées, à savoir deux séquences gauches, deux droites et deux symétriques. Un inconvénient de cette première variante est donc qu'elle nécessite un nombre important de touches (81-87), risquant d'induire de la confusion chez l'opérateur au moment du choix de la séquence et augmentant le risque que l'opérateur se trompe de touche. D'autant que, lors du franchissement d'une délimitation (61), l'opérateur est souvent amené à effectuer un demi-tour et doit donc se concentrer sur d'autres commandes.

Afin de laisser la possibilité à l'opérateur de choisir la prochaine séquence par avance, ce qui réduit le risque qu'il ne se trompe de touche (81-87) et lui permet de se concentrer davantage sur la conduite et/ou d'autres tâches ou commandes lors du franchissement d'une délimitation (61), dans la variante préférée, un mode droit est associé aux séquences droites et un mode gauche est associé aux séquences gauches. Dans la variante préférée, un mode symétrique est associé aux séquences symétriques.

Avantageusement, le contrôleur (7) est configuré pour permettre d'entrer dans le mode droit dans lequel seules les séquences droites peuvent être exécutées. De plus, le contrôleur (7) est configuré pour permettre d'entrer dans le mode gauche dans lequel seules les séquences gauches peuvent être exécutées. Dans la variante préférée, le contrôleur (7) est configuré pour permettre d'entrer dans le mode droit grâce à la saisie d'une commande de sélection droite, et dans le mode gauche grâce à la saisie d'une commande de sélection gauche. Toujours dans la variante préférée, le contrôleur (7) est configuré pour permettre d'entrer dans le mode symétrique grâce à la saisie d'une commande de sélection symétrique. Il est stipulé qu'aucune saisie de commande de sélection ne permet de transposer en soulèvement ou abaissement une unité (30,40,50). Grâce à ces dispositions, il est possible d'entrer dans un ou chaque mode avant d'arriver à une délimitation (61). Une fois entré dans un mode, ce mode est dit en cours. Aussi, il est possible d'entrer dans un ou chaque mode sans pour autant démarrer de séquence ni transposer en soulèvement ou en abaissement une unité (30,40,50). Le fait de pouvoir entrer dans un mode à l'avance laisse à l'opérateur plus de temps pour faire son choix, évitant des erreurs de manipulation, et permettant à l'opérateur de se concentrer davantage sur les autres commandes. Dans le cas d'un écran (80), le nombre de touches (81-87) peut en outre être réduit, au moins lorsqu'aucune séquence n'est en cours.

Ainsi que représenté sur la figure 2, l'interface (8) est dotée d'une touche de sélection droite (83) associée au mode droit et d'une touche de sélection gauche (81) associée au mode gauche. Préférentiellement, l'interface (8) est aussi dotée d'une touche de sélection symétrique (82). Dans la variante préférée, l'interface (8) est dotée d'au moins trois touches de sélection (81-83), chacune étant associée à un mode respectif. Le contrôleur (7) est configuré pour que les touches de sélection (81,82,83) soient préférentiellement désactivées lorsqu'une séquence est en cours, permettant de s'assurer que la séquence en cours soit terminée avant d'en démarrer une autre. En vue que l'interface (8) renseigne l'opérateur du mode en cours, le contrôleur (7) est configuré pour que lorsqu'il est entré dans un mode, la touche de sélection (81,82,83) associée à ce mode est affichée différemment que les autres touches de sélection (81,82,83). Par exemple, lorsque le contrôleur (7) est entré dans un mode, la touche de sélection (81,82,83) correspondant à ce mode est la seule affichée sur l'écran (80), les autres touches de sélection (81,82,83) étant dissimulées, respectivement présentant la deuxième apparence. Alternativement ou additionnellement, lorsqu'une touche (81-87) désactivée est actionnée, le contrôleur (7) peut être configuré pour émettre un avertissement, évitant ainsi une erreur de manipulation et améliorant la qualité de travail. L'avertissement peut être sonore et/ou visuel. Alternativement ou additionnellement, lorsqu'un écran (80) est tactile et que l'opérateur le touche à côté d'une touche (81-87) active, le contrôleur (7) peut aussi être configuré pour émettre un avertissement.

De manière simple et rapide, dans la variante préférée, chaque commande de sélection correspond à l'actionnement unique d'une seule touche de sélection (81,82,83) respective. Dans la variante préférée, la saisie de la commande de sélection droite correspond à l'actionnement unique de la touche de sélection droite (83), et la saisie de la commande de sélection gauche correspond à l'actionnement unique de la touche de sélection gauche (81). De la même manière, la saisie de la commande de sélection symétrique correspond à l'actionnement unique de la touche de sélection symétrique (82). Dans une variante alternative, la commande de sélection correspond à l'actionnement consécutif et/ou simultané d'une ou plusieurs touche(s) (81-87).

Grâce à la possibilité d'entrer dans un mode, chacune des commandes d'abaissement et de soulèvement peut être identique quel que soit le mode en cours. A cet effet, l'interface (8) peut être dotée d'une touche de soulèvement (84) et d'une touche d'abaissement (85). Ainsi, dans la variante préférée, le contrôleur (7) est configuré pour que la saisie de la commande d'abaissement corresponde à l'actionnement unique de la touche d'abaissement (85) quel que soit le mode en cours. De la même manière, le contrôleur (7) est configuré pour que la saisie de la commande de soulèvement corresponde préférentiellement à l'actionnement unique de la touche de soulèvement (84) quel que soit le mode en cours. De telles dispositions permettent de réduire le nombre de touches, respectivement le nombre de touche actives, au moins lorsqu'aucune séquence n'est en cours, réduisant ainsi davantage le risque d'erreur de manipulation.

Il ressort de ce qui précède que, dans la variante préférée, la touche de sélection gauche (81) est associée au mode gauche, et que la touche de sélection droite (83) est associée au mode droit. Dans la variante préférée, la touche de sélection symétrique (82) est associée au mode symétrique. Ainsi, lorsqu'aucune séquence n'est en cours, si une commande de sélection est saisie, respectivement si une touche de sélection (81,82,83) est actionnée, le contrôleur (7) est configuré pour entrer dans le mode correspondant.

De manière simple et rapide, après une séquence, si aucun autre mode n'est sélectionné par une commande de sélection, respectivement par une touche de sélection (81,82,83), le dernier mode entré reste en cours. Autrement dit, le contrôleur (7) est configuré pour que, lorsqu'aucune séquence n'est en cours, si aucun autre mode n'est sélectionné, la prochaine saisie d'une commande d'abaissement ou de soulèvement, respectivement le prochain actionnement d'une des touches d'abaissement (85) ou de soulèvement (84), démarre une nouvelle séquence du dernier mode dans lequel le contrôleur (7) est entré.

Tel qu'illustré sur la figure 5, dans la variante préférée, un capteur de configuration (32,42,52) est associé à chaque unité (30,40,50). Précisément, un capteur de configuration droit (32) est associé l'unité droite (31), un capteur de configuration gauche (42) est associé l'unité gauche (41), et un capteur de configuration central (52) est associé l'unité centrale (51). Chaque capteur de configuration (32,42,52) permet au moins de détecter si l'unité (30,40,50) associée est en configuration de travail ou de manœuvre. De plus, chaque capteur de configuration (32,42,52) peut renseigner le contrôleur (7) sur la configuration de l'unité (30,40,50) associée.

Les touches d'abaissement (85) et de soulèvement (84) sont préférentiellement affichées toutes les deux sur l'écran (80) jusqu'au démarrage d'une séquence. Dans cette variante préférée, dès qu'une séquence est démarrée par l'actionnement d'une des touches de soulèvement (84) et d'abaissement (85), l'autre (des touches de soulèvement (84) et d'abaissement (85)) n'est plus affichée (voir figure 3B), réduisant le nombre de touches (81-87), respectivement le nombre de touches actives, et diminuant le risque d'erreur de manipulation. De plus, l'écran (80), le cas échéant, renseigne ainsi l'opérateur sur la séquence en cours.

Dans la variante préférée, le contrôleur (7) est configuré de sorte que si, au démarrage d'une séquence, les capteurs de configuration (32,42,52) renseignent le contrôleur (7) que chacune des unités (30,40,50) est dans sa configuration de travail, la touche d'abaissement (85) est désactivée. Dans la variante préférée, le contrôleur (7) est configuré de sorte que si, au démarrage d'une séquence, les capteurs de configuration (32,42,52) le renseignent que chacune des unités (30,40,50) est dans sa configuration de travail, la touche d'abaissement (85) est affichée différemment que la touche de soulèvement (84). Dans ce cas, la touche d'abaissement (85) présente la deuxième apparence, respectivement n'est pas affichée dans le cas où l'interface (8) est dotée d'un écran (80). Similairement, si, au démarrage d'une séquence, les capteurs de configuration (32,42,52) renseignent le contrôleur (7) que chacune des unités (30,40,50) est dans sa configuration de manœuvre, la touche de soulèvement (84) est désactivée. Dans la variante préférée, le contrôleur (7) est configuré de sorte que si, au démarrage d'une séquence, les capteurs de configuration (32,42,52) le renseignent que chacune des unités (30,40,50) est dans sa configuration de manœuvre, la touche de soulèvement (84) est affichée différemment que la touche d'abaissement (85). Dans ce cas, la touche de soulèvement (84) présente la deuxième apparence, respectivement n'est pas affichée dans le cas où l'interface (8) est dotée d'un écran (8). Sur la figure 3B, la touche de soulèvement (84) a ainsi été dissimulée. De telles dispositions réduisent le risque d'erreur de manipulation, et le nombre de touches (81-87) affichées à l'écran (80) le cas échéant. Par ailleurs, ces dispositions permettent de renseigner l'opérateur lorsque toutes les unités (30,40,50) sont dans la même configuration au démarrage d'une séquence. Aussi, dans la variante préférée, le contrôleur (7) est configuré de sorte que, au démarrage d'une séquence, si les capteurs de configuration (32,42,52) renseignent le contrôleur (7) que toutes les unités (30,40,50) sont dans la même configuration, une des touches de soulèvement (84) et d'abaissement est désactivée, permettant de réduire le nombre de touches (81-87) actives au démarrage d'une séquence. Préférentiellement, au démarrage d'une séquence, si les capteurs de configuration (32,42,52) renseignent le contrôleur (7) que toutes les unités (30,40,50) sont dans la même configuration, le contrôleur (7) est configuré de sorte que les touches de soulèvement (84) et d'abaissement (85) sont affichées différemment, réduisant ainsi le risque se tromper de touche.

Dans le cas où la machine (1) est équipée de capteurs de configuration (32,42,52), au démarrage d'une séquence, si toutes les unités (30,40,50) ne sont pas dans la même configuration, les touches de soulèvement (84), et d'abaissement (85) sont préférentiellement toutes les deux affichées, permettant de déterminer la séquence suivante. Dans le cas où la machine (1) est équipée de capteurs de configuration (32,42,52), lorsqu'un mode est en cours, et qu'au démarrage d'une séquence, toutes les unités (30,40,50) ne sont pas dans la même configuration, le contrôleur (7) est configuré de sorte que la première saisie de la commande détermine la séquence suivante. Ainsi, lorsqu'un mode est en cours, et qu'au démarrage de la séquence, toutes les unités (30,40,50) ne sont pas dans la même configuration, si la première saisie est une saisie de la commande en soulèvement, alors la séquence démarrée est une séquence en soulèvement. Inversement, lorsqu'un mode est en cours, et qu'au démarrage de la séquence, toutes les unités (30,40,50) ne sont pas dans la même configuration, si la première saisie est une saisie de la commande d'abaissement, alors la séquence démarrée est une séquence en abaissement.

Alternativement, si une unité (30,40,50) est dans une configuration différente que les deux autres unités (30,40,50), alors la séquence suivante sera déterminée par la configuration des deux unités (30,40,50) qui sont dans la même configuration.

Ainsi que représenté sur la figure 2, dans une deuxième variante de réalisation alternative au cours de laquelle la machine (1) est équipée de capteurs de configuration (32,42,52), lorsqu'un mode est en cours, seule une touche d'action commune (86) est active. Dans la deuxième variante, le contrôleur (7) est configuré de sorte que lorsqu'un mode est en cours et qu'au démarrage d'une séquence, les capteurs de configuration (32,42,52) renseignent le contrôleur (7) que chacune des unités (30,40,50) est dans sa configuration de manœuvre, chaque actionnement de la touche d'action commune (86) permet de transposer en abaissement au moins une unité (30,40,50). Dans cette deuxième variante, le contrôleur (7) est aussi configuré de sorte que lorsqu'un mode est en cours et qu'au démarrage d'une séquence, les capteurs de configuration (32,42,52) renseignent le contrôleur (7) que chacune des unités (30,40,50) est dans sa configuration de travail, chaque actionnement de la touche d'action commune (86) permet de transposer en soulèvement au moins une unité (30,40,50). Ainsi, dans la deuxième variante, la commande d'abaissement et la commande de soulèvement sont identiques, permettant de réduire encore le nombre de touches (81-87) et le risque d'erreur de manipulation.

De manière simple et rapide, dans la variante préférée, le contrôleur (7) est configuré de sorte que le démarrage d'une séquence correspond à la première saisie d'une commande d'abaissement ou d'une commande de soulèvement quel que soit le mode en cours. Autrement dit, dans la variante préférée, lorsqu'un mode est en cours mais qu'aucune séquence n'est en cours, le contrôleur (7) est configuré de sorte que la première saisie de la commande d'abaissement ou de soulèvement permette de démarrer la séquence correspondante en plus de transposer en abaissement ou en soulèvement au moins une des unités (30,40,50). Dans une variante alternative, lorsqu'un mode est en cours mais qu'aucune séquence n'est en cours, le contrôleur (7) est configuré de sorte qu'une commande supplémentaire saisie avant la première saisie de la commande d'abaissement ou de soulèvement permette de démarrer la séquence.

L'interface (8) peut également comporter une touche d'arrêt (87). La touche d'arrêt (87) est destinée à stopper la séquence en cours. Dans un but sécuritaire, l'actionnement de la touche d'arrêt (87) stoppe immédiatement tout soulèvement et/ou tout abaissement d'unité(s) (30,40,50). Si la touche d'arrêt (87) est actionnée une seconde fois au cours d'une séquence, la séquence reprend normalement son cours.

Avec un écran (80), la touche d'arrêt (87) apparait préférentiellement sur l'écran (80) après le démarrage de la séquence, et est préférentiellement dissimulée à la fin de la séquence. Avec une interface (8) dotée d'un écran (80), au cours d'une séquence, la touche d'arrêt (87) peut remplacer celle entre la touche de soulèvement (84) et la touche d'abaissement (85) qui a été dissimulée au démarrage de la séquence en cours. De préférence, lorsqu'une touche (81-87) est affichée sur l'écran (80), elle occupe toujours le même emplacement, exceptée la touche d'arrêt (87).

Alternativement ou additionnellement, si, au cours d'une séquence, une commande de soulèvement est saisie alors que l'unité (30,40,50) visée est en configuration de manœuvre, cette commande de soulèvement n'a pas d'effet (et l'unité (30,40,50) visée reste dans la configuration de manœuvre). Réciproquement, si, au cours d'une séquence, une commande d'abaissement est saisie alors que l'unité (30,40,50) visée est en configuration de travail, cette commande d'abaissement ne produit pas d'effet (et l'unité (30,40,50) visée reste dans la configuration de travail).

Le contrôleur (7) peut être installé au choix sur le tracteur (3) ou la machine (1). Le contrôleur (7) et/ou l'interface (8) peut/peuvent faire partie de la machine (1) ou du tracteur (3). Alternativement, l'interface (8) et le contrôleur (7) pourraient être un seul et même composant. La machine (1) est reliée avec le tracteur (3) par le biais d'un bus de connexion normé, par exemple ISOBUS (ISO 11783), permettant à la machine (1) de fonctionner avec différentes marques de tracteur (3) et/ou de composants (interface (8), contrôleur (7), ...). Le contrôleur (7) peut ainsi également recevoir un signal représentatif de la vitesse d'avance de la machine (1). Le signal représentatif de la vitesse d'avance de la machine (1) peut être obtenu par au moins un capteur GPS, un capteur de vitesse monté sur la machine (1) et/ou un capteur de vitesse du tracteur (3).

Sur les figures 1, 4 et 5, l'unité centrale (50) est située devant les unités gauche (40) et droite (30) en vue de dessus. Sur ces figures, l'unité centrale (50) est située devant le tracteur (3), évitant ainsi de rouler sur une zone à travailler (62). Tel que représenté sur les figures 1 et 4, afin d'assurer le travail de la totalité du champ même lors de virages, l'unité centrale (50) est située partiellement entre l'unité gauche (40) et l'unité droite (30) vu selon le sens de travail (S). Autrement dit, vu suivant le sens de travail (S), l'unité centrale (50) chevauche légèrement chacune des unités gauche (40) et droite (30). De préférence, ces chevauchements peuvent être réglés, simultanément et/ou séparément. L'unité centrale (50) peut aussi être située totalement entre l'unité gauche (40) et l'unité droite (30) vu suivant le sens de travail (S).

Ainsi que représenté sur la figure 1, le châssis (2) peut être monté sur roues (15). Les roues (15) se situent préférentiellement à l'arrière du châssis (2). En outre, dans sa configuration de travail, chaque unité (30,40,50) repose au moins partiellement au sol via des patins (14). Alternativement ou additionnellement, chaque unité (30,40,50) peut reposer au sol via des roulettes. En configuration de travail, chaque unité (30,40,50) est configurée pour récolter du produit.

Lorsque le produit est déposé par une unité (30,40,50), respectivement par un groupeur (33,43,53), le produit forme un andain (22) sur le sol grâce au déplacement de la machine (1) dans le sens de travail (S). L'andain (22) est donc longitudinal au sens de travail (S). Tel que représenté sur la figure 4, les groupeurs droit (33) et gauche (43) déplacent le produit en direction du plan médian (4), l'andain (22) étant déposé entre l'unité droite (30) et l'unité gauche (40). A cet effet, dans leur configuration de travail, les unités gauche (40) et droite (30) sont éloignées l'une de l'autre suivant une direction perpendiculaire au sens de travail (S). Les groupeurs droit (33) et gauche (43) sont préférentiellement alignés suivant la direction de groupage (C), réduisant la longueur de la machine (1) suivant le sens de travail (S).

Dans sa configuration de manœuvre, chaque unité (30,40,50) est plus éloignée du sol que dans sa configuration de travail. Dans sa configuration de manœuvre, chaque unité (30,40,50) est légèrement éloignée du sol, de sorte que le déplacement entre les configurations de travail et de manœuvre soit le plus rapide possible. Dans sa configuration de manœuvre, chaque unité (30,40,50) ne récolte pas de produit. La configuration de manœuvre permet notamment à la machine (1) de se déplacer sur une zone déjà travaillée sans défaire les andains.

Les unités (30,40,50) peuvent également occuper une configuration de transport. Dans leur configuration de transport, la dimension des unités gauche (30) et droite (40) vue suivant le sens de travail (S) est réduite. Dans leur configuration de transport, chaque unité gauche (30) et droite (40) est orientée parallèlement au plan médian (4), réduisant la largeur de la machine (1). Afin de minimiser la hauteur de la machine (1) dans la configuration de transport, les unités gauche (30) et droite (40) sont préférentiellement orientées parallèlement au sens de travail (S). Dans leur configuration de transport, les unités (30,40,50) sont éloignées du sol, permettant une vitesse d'avance plus importante sans risquer d'abimer la machine (1). La configuration de transport de l'unité centrale (50) est préférentiellement identique à sa configuration de manœuvre.

Dans la variante préférée, chaque actionneur (31,41,51) permet également de transposer l'unité (30,40,50) associée entre configuration de manœuvre et configuration de transport, et/ou entre configuration de travail et configuration de transport. Dans la variante préférée, chaque capteur de configuration (32,42,52) permet aussi de détecter si l'unité (30,40,50) associée est en configuration de travail, de manœuvre ou de transport. Dans la variante préférée, si, au démarrage d'une séquence, un capteur de configuration (32,42,52) renseigne le contrôleur (7) que l'unité (30,40,50) associée est dans sa configuration de transport, le contrôleur (7) est configuré pour que l'unité (30,40,50) associée ne soit ni transposée en soulèvement, ni en abaissement au cours de cette séquence.

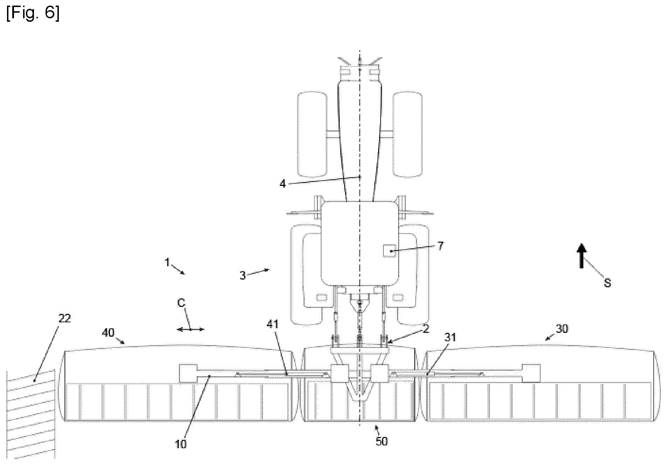

Ainsi qu'il a été mentionné plus haut dans cette description, d'autres agencements des unités (30,40,50) sur la machine (1) sont possibles. A titre d'exemple, une machine (1) avec un autre agencement possible des unités (30,40,50) est représentée sur la figure 6. Sur cette figure 6, les unités centrale (50), gauche (40) et droite (30) sont alignées suivant une droite transversale au sens de travail (S) et l'unité centrale (50) est reliée au même châssis (2) que les unités gauche (40) et droite (30). Préférentiellement, les unités (30,40,50) sont alignées perpendiculairement au sens de travail (S). Dans le cas d'une machine (1) telle que représentée sur la figure 6, les séquences préenregistrées peuvent être différentes qu'avec un agencement d'unités (30,40,50) tel que représenté sur la figure 4.

Ainsi, afin de s'adapter à une autre type de délimitation (61) et/ou un autre agencement des unités (30,40,50), le contrôleur (7) peut être configuré pour permettre d'exécuter une séquence en abaissement gauche alternative au cours de laquelle la première saisie de la commande d'abaissement permet de transposer en abaissement l'unité gauche (30), la deuxième saisie de la commande d'abaissement permet de transposer en abaissement l'unité centrale (50), et la troisième saisie de la commande d'abaissement permet de transposer en abaissement l'unité droite (40). Dans le même but, le contrôleur (7) peut être configuré pour permettre d'exécuter une séquence en soulèvement gauche alternative au cours de laquelle la première saisie de la commande de soulèvement permet de transposer en soulèvement l'unité gauche (30), la deuxième saisie de la commande de soulèvement permet de transposer en soulèvement l'unité centrale (50), et la troisième saisie de la commande de soulèvement permet de transposer en soulèvement l'unité droite (40).

Aussi, afin de s'adapter à une autre type de délimitation (61) et/ou un autre agencement des unités (30,40,50), le contrôleur (7) peut être configuré pour permettre d'exécuter une séquence en abaissement droite alternative au cours de laquelle la première saisie de la commande d'abaissement permet de transposer en abaissement l'unité droite (40), la deuxième saisie de la commande d'abaissement permet de transposer en abaissement l'unité centrale (50), et la troisième saisie de la commande d'abaissement permet de transposer en abaissement l'unité gauche (30). Dans le même but, le contrôleur (7) peut être configuré pour permettre d'exécuter une séquence en soulèvement gauche alternative au cours de laquelle la première saisie de la commande de soulèvement permet de transposer en soulèvement l'unité droite (40), la deuxième saisie de la commande de soulèvement permet de transposer en soulèvement l'unité centrale (50), et la troisième saisie de la commande de soulèvement permet de transposer en soulèvement l'unité gauche (30).

Afin de s'adapter à d'autres types de délimitation (61) et/ou d'autres agencements des unités (30,40,50), le contrôleur (7) peut être configuré pour permettre d'exécuter d'autres séquences encore.

L'invention concerne aussi un contrôleur (7) pour une machine (1) de récolte telle que décrite ci-dessus. Le contrôleur (7) est configuré pour permettre de transposer en abaissement ou en soulèvement chaque unité (30,40,50) d'une machine (1) telle que décrite ci-dessus. Aussi, le contrôleur (7) est configuré pour d'exécuter une séquence en abaissement et une séquence en soulèvement telles que décrites ci-dessus. De préférence, chaque séquence est enregistrée dans une mémoire (MS). La mémoire (MS) peut faire partie du contrôleur (7). Dans la variante préférée, le contrôleur (7) comporte une mémoire (MS) et un processeur. Alternativement, chaque séquence peut être enregistrée dans une mémoire (MS) externe reliée au contrôleur (7). En outre, l'invention peut également concerner un programme informatique contenant un code permettant de transposer en abaissement ou de transposer en soulèvement chaque unité (30,40,50) d'une machine (1) telle que décrite ci-dessus. Aussi, ledit programme informatique contient un code permettant d'exécuter une séquence en abaissement et une séquence en soulèvement telles que décrites ci-dessus.

Bien entendu, l'invention n'est pas limitée aux réalisations décrites et représentées aux dessins annexés, et déclinées en plusieurs variantes constructives. Des modifications restent possibles, notamment du point de vue de la constitution des divers éléments ou par substitution d'équivalents techniques, sans sortir pour autant du domaine de protection de l'invention.

## Revendications

1. Machine (1) de récolte se déplaçant dans un sens de travail (S) et comportant une unité droite (30), une unité gauche (40) et une unité centrale (50) s'étendant au moins majoritairement entre l'unité gauche (40) et l'unité droite (30) vu suivant le sens de travail (S), chaque unité (30, 40, 50) pouvant occuper une configuration de travail et une configuration de manœuvre, une interface (8) permettant la saisie de commandes étant associée à la machine (1) et reliée à un contrôleur (7) permettant de transposer en abaissement chaque unité (30,40,50), ce qui revient à la transposer de sa configuration de manœuvre en configuration de travail, et de transposer en soulèvement chaque unité (30,40,50), ce qui revient à la transposer de sa configuration de travail en configuration de manœuvre, machine **caractérisée en ce que** le contrôleur (7) est configuré pour permettre d'exécuter une séquence en abaissement au cours de laquelle chaque saisie d'une même commande d'abaissement permet de transposer en abaissement au moins une des unités (31,41,51), et une séquence en soulèvement au cours de laquelle chaque saisie d'une même commande de soulèvement permet de transposer en soulèvement au moins une des unités (31,41,51).

2. Machine selon la revendication 1, **caractérisée en ce que** le contrôleur (7) est configuré pour permettre d'exécuter une séquence en soulèvement droite au cours de laquelle la première saisie de la commande de soulèvement permet de transposer en soulèvement l'unité centrale (50), la deuxième saisie de la commande de soulèvement permet de transposer en soulèvement l'unité droite (30), et la troisième saisie de la commande de soulèvement permet de transposer en soulèvement l'unité gauche (40).

3. Machine selon l'une des revendications 1 ou 2, **caractérisé en ce que** le contrôleur (7) est configuré pour permettre d'exécuter une séquence en abaissement droite au cours de laquelle la première saisie de la commande d'abaissement permet de transposer en abaissement l'unité centrale (50), la deuxième saisie de la commande d'abaissement permet de transposer en abaissement l'unité droite (30), et la troisième saisie de la commande d'abaissement permet de transposer en abaissement l'unité gauche (40).

4. Machine selon l'une quelconque des revendications 1 à 3, **caractérisée en ce que** le contrôleur (7) est configuré pour permettre d'exécuter une séquence en soulèvement gauche au cours de laquelle la première saisie de la commande de soulèvement permet de transposer en soulèvement l'unité centrale (50), la deuxième saisie de la commande de soulèvement permet de transposer en soulèvement l'unité gauche (40), et la troisième saisie de la commande de soulèvement permet de transposer en soulèvement l'unité droite (30).

5. Machine selon l'une quelconque des revendications 1 à 4, **caractérisée en ce que** le contrôleur (7) est configuré pour permettre d'exécuter une séquence en abaissement gauche au cours de laquelle la première saisie de la commande d'abaissement permet de transposer en abaissement l'unité centrale (50), la deuxième saisie de la commande d'abaissement permet de transposer en abaissement l'unité gauche (40), et la troisième saisie de la commande d'abaissement permet de transposer en abaissement l'unité droite (30).

6. Machine selon l'une quelconque des revendications 1 à 5, **caractérisée en ce qu'**un nombre déterminé de commandes est associé à chaque séquence, et **en ce que** le contrôleur (7) est configuré pour que chaque séquence prenne fin une fois que toutes les commandes de cette séquence sont saisies.

7. Machine selon l'une quelconque des revendications 2 à 6, **caractérisée en ce que** le contrôleur (7) est configuré pour permettre d'entrer dans un mode droit dans lequel seules les séquences droites peuvent être exécutées, et **en ce que** le contrôleur (7) est configuré pour permettre d'entrer dans un mode gauche dans lequel seules les séquences gauches peuvent être exécutées.

8. Machine selon la revendication 7, **caractérisée en ce que** l'interface (8) est dotée de touches de sélection (81,82,83), chacune étant associée à un mode respectif, le contrôleur (7) étant configuré pour que les touches de sélection (81,82,83) soient désactivées lorsqu'une séquence est en cours.

9. Machine selon l'une quelconque des revendications 7 ou 8, **caractérisée en ce que** l'interface (8) est dotée d'une touche de soulèvement (84) et d'une touche d'abaissement (85), et **en ce que** le contrôleur (7) est configuré pour que la saisie de la commande d'abaissement corresponde à l'actionnement unique de la touche d'abaissement (85) quel que soit le mode en cours, et que la saisie de la commande de soulèvement corresponde à l'actionnement unique de la touche de soulèvement (84) quel que soit le mode en cours.

10. Machine selon la revendication 8, **caractérisée en ce qu'**un capteur de configuration (32,42,52) est associé à chaque unité (30,40,50), chaque capteur de configuration (32,42,52) permettant de détecter si l'unité (30,40,50) associée est en configuration de travail ou de manœuvre, et **en ce que**, le contrôleur (7) est configuré de sorte qu'au démarrage d'une séquence, si les capteurs de configuration (32,42,52) renseignent le contrôleur (7) que toutes les unités (30,40,50) sont dans la même configuration, une des touches de soulèvement (84) et d'abaissement (85) est désactivée.

11. Machine selon l'une quelconque des revendications 1 à 10, **caractérisé en ce que** le contrôleur (7) est configuré pour que, lorsqu'aucune séquence n'est en cours, la première saisie de la commande d'abaissement ou de soulèvement permette de démarrer une séquence.

12. Contrôleur (7) **caractérisé en ce qu'**il est configuré pour permettre de transposer en abaissement ou de transposer en soulèvement chaque unité (30,40,50) d'une machine (1) selon l'une des revendications 1 à 11.

13. Programme informatique pour une machine (1) de récolte, **caractérisé en ce qu'**il contient un code permettant de transposer en abaissement ou de transposer en soulèvement chaque unité (30,40,50) d'une machine (1) selon l'une des revendications 1 à 12.
